# EUROPEAN PATENT APPLICATION

(11) **EP 4 549 346 A1**
(43) Date of publication of application: **07.05.2025**
(21) Application number: 23830752.4
(22) Date of filing: 27.03.2023
(51) Int. Cl.: B65G 3/02, B65G 67/60

(54) **POWDER PROPERTY-MODIFYING METHOD, PRODUCTION METHOD FOR WATER-CONTAINING BULK MATERIAL, WATER-CONTAINING BULK MATERIAL, AND GRANULATION METHOD FOR RAW MATERIAL FOR SINTERING**

(30) Priority: 30.06.2022 JP 2022105998
(71) Applicant: JFE Steel Corporation, Tokyo 100-0011 (JP)
(72) Inventor: KINUGASA Yuki, Tokyo 100-0011 (JP)
(74) Representative: Haseltine Lake Kempner LLP
(86) International application number: PCT/JP2023/012200
(87) International publication number: WO 2024/004298

(57) **Abstract**

Provided are methods for solving various problems that are attributed to moisture contents when handling water-containing powders. One method is a powder property-modifying method used when handling a water-containing bulk material including a mineral ore, coal, and limestone, and includes adding an active component of a chemical agent whose main component is at least one selected from a polymer flocculant, an inorganic flocculant, and a polymer water absorption material, in an amount of 0.001 to 0.07% by mass with respect to the mass of the bulk material, in which water inside the bulk material is retained in a bridge structure formed between the chemical agent and a powder composing the bulk material. Another method is a production method for a water-containing bulk material that is transported via at least one selected from a vessel, a transporter vehicle, a loading heavy machine, a delivering heavy machine, a conveyor belt, and a storage tank. This production method includes modifying such water-containing bulk material with the above modifying method.

## Description

### Technical field

The present invention relates to a method for modifying the properties of water-containing powders, which was developed to resolve problems attributed to water that occurs when handling water-containing bulk materials including mineral ores, coal, and limestone. Further, the present invention relates to a water-containing bulk material production method using such modifying method, a water-containing bulk material produced by such method, and a sintering raw material granulation method using such water-containing bulk material.

### Background art

In the case of a powder, e.g., a bulk material such as a mineral ore and coal, troubles caused by adhesion to equipment and spillage occur frequently when the moisture content value thereof increases at the time of mining and transporting the same. As the moisture content value increases even more, the bulk material will turn into a slurry, which will not only make it impossible to handle such bulk material, but may also lead to damaged equipment due to, for example, blowout at a connecting part(s) and collapsing of a storage pile. Further, many of these bulk materials are being subjected to marine transportation all over the world. When a liquefaction phenomenon takes place during marine transportation, the hull of a vessel will be off balance such that the transportation vessel will capsize, troubles will occur during the cargo handling operation on the side of a port of discharge, and equipment will be damaged.

Further, a bulk material will exhibit a higher level of moisture content if it also rains during the operation; in such case, these troubles will occur at a higher frequency, and a significant impact will be brought by these troubles occurring.

With regard to these problems, there have been conventionally employed methods such as those disclosed in Patent literatures 1 and 2. That is, there have been proposed, for example, methods focused on the removal of water, such as a method where while spring water is occurring, the spring water is once pumped up by drainage equipment (suction machine) before resuming unloading.

### Citation List

### Patent Literature

Patent literature 1: JP S60-204526 A
Patent literature 2: JP S50-13339 Y
Patent literature 3: JP S61-60784 A
Patent literature 4: JP S61-164658 A

### Summary of Invention

### Technical Problems

However, the above conventional techniques have the following problems.

That is, the pumping and drainage methods proposed by Patent literatures 1 and 2 are such that in order to pump up spring water, the vessel needs to be moved to a location where the drainage, i.e., pumping equipment is installed every time drainage is performed. Alternatively, there is a need to, for example, move the drainage equipment itself and perform pumping from inside the hold. Thus, there has been a problem that an operation time is long.

Particularly, spring water mostly occurs in a dent that occurs after grabbing is carried out by a grab bucket during unloading. For this reason, with the above pumping and drainage methods, the pumping operation of spring water often needs to be repeated. Thus, there has been a problem that the operation efficiency significantly decreases as a result of repeating the suspension and resumption of the unloading operation.

Especially, in recent years, as for mineral ores and coal, existing mines have been gradually closed due to resource depletion; mineral ores and coal with a relatively poor quality, e.g., those with a high moisture content ratio have started accounting for a large proportion. Thus, these problems have become more noticeable.

Further, when the moisture content ratio of the mineral ores and coal that are unloaded is high, the bulk material is likely to fluidize before spring water occurs. Therefore, there have been problems with transportation using a conveyor belt at the time of unloading. Other than transportation troubles, there have also been many problems in maintenance of conveyor belt equipment.

Moreover, the conventional techniques proposed by Patent literatures 1 and 2 are targeted at pumping up only spring water. However, a powder with a small particle size that has been separated from the bulk material with a large particle size flows into the dent portion that occurs after grabbing is carried out by the grab bucket, and is often turned into a sludge, i.e., a slurry. When pumping up such slurry-like fluid, it is difficult for the conventional drainage equipment to pump up the same, which leads to an even lower operation efficiency every time spring water occurs. If unloaded as it is, as described above, since the bulk material unloaded is rich in fluidity, it may flow out of the conveyor belt or blow out at a connecting part(s). As such, unloading faults will occur.

In addition to the examples described above, properties such as adherability and fluidity that are attributed to moisture content when handling a water-containing powder cause various problems at the time of cargo handling operation, at the time of storage, at the time of transportation, and at the time of use, i.e., at the time of equipment installation and during processing. As a problem that occurs at the time of use, for example, in a process for carrying out granulation by adding water to a powder, when water is excessively exposed on the surface of a granulated product that is still in the making in terms of granulation, the powder with a smaller particle size that is easy to agglomerate due to the surface tension of water may preferentially adhere and be granulated. In this way, there may be obtained a coarse and low-strength granulated product mainly composed of a powder with a small particle size. Further, in a stage before carrying out the granulation process by adding water to a powder, the powder with a smaller particle size will have already been solidified under the influence of the moisture content, i.e., naturally granulated, whereby there may be obtained a coarse and low-strength granulated product mainly composed of a powder with a small particle size.

Further, a powder that exhibits problems such as adherability and fluidity due to the moisture content is usually a powder having a particle size of 3 mm or smaller. However, even in the case of a bulk material whose maximum particle size is larger than 3 mm, moisture content-attributed adherability and fluidity may be problematic when a powder with a particle size of 3 mm or smaller is contained therein, or when a portion with a particle size of 3 mm or smaller is formed due to, for example, an impact during transportation. Moisture content-attributed adherability and fluidity becomes problematic when a powder used is one having a particle size of 3 mm or smaller, and when a bulk material used is one containing 10% by mass or more of a powder with a particle size of 3 mm or smaller.

In response to these problems, the inventor conducted a series of studies, focusing on the moisture content ratio reducing methods proposed in Patent literatures 3 and 4. However, the methods disclosed in Patent literatures 3 and 4 have a problem that since a water-absorbing resin as a solid is used, it is difficult to uniformly bring such water-absorbing resin into contact with a bulk material at the time of unloading. In addition, it was made clear that since a water-absorbing resin swells upon containing water, the swollen water-absorbing resin or a bulk material itself containing such water-absorbing resin may cause troubles at the time of handling. Further, since a water-absorbing resin requires a time period of several tens of seconds to several tens of minutes before exhibiting its effect once in contact with the target water, it has been extremely difficult to achieve the desired effect in an existing facility without impairing productivity.

The present invention was made in view of the above circumstances; it is an object of the present invention to provide a technique capable of solving various problems caused by properties such as adherability and fluidity that are attributed to moisture content when handling a water-containing powder.

### Solution to Problem

A powder property-modifying method of the present invention that is capable of advantageously solving the above problems is characterized by being a method used when handling a water-containing bulk material including a mineral ore, coal, and limestone, and is characterized by including:
adding an active component of a chemical agent whose main component is at least one selected from a polymer flocculant, an inorganic flocculant, and a polymer water absorption material, in an amount of 0.001 to 0.07% by mass with respect to the mass of the bulk material; and
optionally stirring and mixing the bulk material either when or after adding the chemical agent to the bulk material, whereby the chemical agent is dispersed in a powder composing the bulk material via stirring performed utilizing a dedicated stirrer or existing equipment including a crusher, stirring performed by a heavy machine, or stirring performed utilizing an impact incurred by a connecting drop of a transportation conveyor belt,

wherein water inside the bulk material is retained in a bridge structure formed between the chemical agent and the powder composing the bulk material, or
wherein the form or movement of the water inside the bulk material is controlled by the bridge structure formed between the chemical agent and the powder composing the bulk material.

Here, as for the powder property-modifying method of the present invention, more preferable resolutions can be brought when
(a) the active component is previously diluted, dispersed, or dissolved in an aqueous or organic liquid to be turned into a chemical agent, followed by adding this chemical agent to a bulk material as a target, in which an aqueous or organic liquid other than the chemical agent is optionally added when adding the chemical agent to the bulk material or when performing the stirring;
(b) a required additive amount of the active component is determined from the mass of the bulk material and a moisture content in the bulk material, and the additive amount of the chemical agent is adjusted so as to satisfy the required additive amount;
(c) the chemical agent is such that a ratio of the active component to a sum of the active component and the liquid is 5 to 60% by mass; and
(d) the chemical agent is such that the ratio of the active component to the sum of the active component and the liquid is 10 to 45% by mass.

A water-containing bulk material production method of the present invention that is capable of advantageously solving the above problems is characterized by being a production method for a water-containing bulk material that is transported via at least one selected from a vessel, a transporter vehicle, a loading heavy machine, a delivering heavy machine, a conveyor belt, and a storage tank. The production method is also characterized by including:
modifying the water-containing bulk material with any of the above modifying methods.

A water-containing bulk material of the present invention that is capable of advantageously solving the above problems is characterized by being a water-containing bulk material that is transported via at least one selected from a vessel, a transporter vehicle, a loading heavy machine, a delivering heavy machine, a conveyor belt, and a storage tank, wherein the water-containing bulk material has been modified by any of the above modifying methods. A sintering raw material granulation method of the present invention is characterized by including:
performing granulation using the above water-containing bulk material as part or all of the raw material.

### Advantageous Effects of Invention

The powder property-modifying method of the present invention has the following effects in a mine, at a port, in a storage yard, during vessel transportation, and at a port of discharge, respectively. The method of the present invention is applied to when the moisture content value in a bulk material such as a mineral ore, coal, and limestone has increased, i.e., when handling a water-containing powder composing a water-containing bulk material. In this way, problems such as equipment shutdown due to adhesion, blowout and reverse flow at the time of transportation, and collapsing of a storage pile will not occur. Thus, operation can be carried out in a continuous manner without having to stop it as in the past. Here, the present invention is industrially useful because the productivity in each process can be improved with the invention. It is preferable if stirring and mixing is performed when or after adding the chemical agent to the bulk material, because the chemical agent can be dispersed in the powder whereby the powder property-modifying effect can be further improved. The handling property of the chemical agent can be improved if it is turned into an aqueous or organic diluted solution, dispersed solution, or solution. Further, the dispersibility of the chemical agent in the powder improves when adding the chemical agent to the bulk material and performing stirring, which is preferable. It is preferable if another aqueous or organic liquid is added when adding the chemical agent or stirring the bulk material, because the dispersibility of the chemical agent can be improved.

The water-containing bulk material production method and water-containing bulk material of the present invention are such that the abovementioned property-modifying method is applied to a water-containing bulk material that is transported via, for example, a vessel, a transporter vehicle, a loading heavy machine, a delivering heavy machine, a conveyor belt, and a storage tank. It is preferable if the property-modifying method is applied in such manner, because the modified water-containing bulk material will help alleviate problems regarding storage and transportation.

The sintering raw material granulation method of the present invention is such that since the small-particle-size powder in the water-containing bulk material is restricted from solidifying while being unevenly distributed, the strength of the granulated product will not deteriorate, and there will be achieved, for example, an improvement in yield at the time of sintering, a uniformity of the mineral structure, and an improvement in productivity, which makes the granulation method of the present invention industrially useful.

### Brief Description of Drawings

[Fig. 1] is a graph showing a correlation between FMP and a chemical agent concentration with respect to a moisture amount in a bulk material.
[Fig.2] is a graph showing a correlation between the chemical agent concentration with respect to the moisture amount in the bulk material and a spillage unit consumption.
[Fig.3] is a graph showing a correlation between the chemical agent concentration (percent by mass) with respect to the moisture amount in the bulk material; and the number of troubles and a troubleshooting time that are associated with conveyor belt transportation.
[Fig.4] is a graph showing a correlation between an active component concentration in the chemical agent and FMP.
[Fig.5] is a graph showing an example of the concentration of the chemical agent added, in accordance with a moisture content in the bulk material.
[Fig.6] is a series of graphs showing how adding or not adding the chemical agent to the bulk material affects various sintering parameters of a sintering raw material, in which (a) shows a gas permeability, (b) shows a sintering time, (c) shows a final product yield, and (d) shows a final product production rate. Description of Embodiments

An embodiment of the present invention is described in detail hereunder. Here, the following embodiment is a set of examples of a method embodying the technical concept of the present invention and is not to limit the configuration of the present invention to those shown below. That is, various modifications can be made to the technical concept of the present invention within the technical scope described in the claims.

### [Chemical agent whose main component is at least one selected from polymer flocculant, inorganic flocculant, and polymer water absorption material]

In this embodiment, there is used a chemical agent whose main component is at least one selected from a polymer flocculant, an inorganic flocculant, and a polymer water absorption material. In terms of addition efficiency and dispersibility of the chemical agent, it is preferred that the chemical agent be used in the form of a chemical solution (chemical agent) that is a diluted solution, solution or dispersed solution prepared by diluting, dissolving or dispersing the chemical agent in an aqueous or organic solvent or dispersion medium. Here, the "aqueous or organic" solvent or dispersion medium respectively refers to a solvent or dispersion medium "containing 50% by mass or more of water or an organic compound(s)," examples of which include a water containing 1% by mass of a surfactant, and an alcohol (organic compound) containing 30% by mass of water.

Further, as the aforementioned main component(s), there are used those causing a powder bridging effect due to an adsorption activity occurring in the powder, which is attributed to the electrostatic force or hydrogen bonds of polymers. Any component can be used as the main component as long as it has an effect of forming coagulation particles (agglomerates) by forming solidified granular structures. For example, there is preferably used an organic flocculant that is in the form of a powder, granules, or a liquid. A polyacrylamide-based (copolymer of acrylamide and sodium acrylate) flocculant, a polyvinyl amidine-based flocculant, an amphoteric polymer-based flocculant and the like are preferred because they exhibit not only a coagulation effect but also a flocculation effect. Here, there may also be used, in combination, a known inorganic flocculant (e.g., aluminum sulfate, aluminum polychloride, sodium aluminate, ferric chloride, ferrous sulfate, and aluminum sulfate), a known organic flocculant, and a known polymer water absorption material.

Moreover, there may also be used, for example, an acrylic acid- or acrylamide-based cation polymer, a methacrylic acid-based polymer, a methacrylic acid amino ester cation polymer, an amidine polymer, and an anionic W/O type emulsion polymer.

In this embodiment, the expression that the chemical agent whose main component is at least one selected from a polymer flocculant, an inorganic flocculant, and a polymer water absorption material, normally refers to a chemical agent containing at least one selected from a polymer flocculant, an inorganic flocculant, and a polymer water absorption material in an amount that is not smaller than the amount considered to yield a flocculation effect. As one example, the chemical agent may be one containing about 20% by mass or more of a polymer flocculant. Obviously, a chemical agent in which the main component(s) are present at 100% may be directly used as the chemical agent.

Here, when the chemical agent is a solid, or when the chemical agent is diluted before use, examples of a solvent and dispersion medium include water and organic liquids, and a solute and dispersoid are, for example, polymers composed of C, H, N, and O. As an organic liquid, there may be used, for example, a hydrocarbon-based solvent, i.e., a compound composed of C and H, or composed of C and H as well as other elements. If using an organic liquid with a low viscosity as a solvent or dispersion medium, there is an advantage that dispersion into a bulk material will improve.

### [Powder property-modifying method]

A powder property-modifying method of this embodiment is such that when handling a water-containing bulk material including a mineral ore, coal, and limestone, the active component(s) in the chemical agent whose main component is at least one selected from a polymer flocculant, an inorganic flocculant, and a polymer water absorption material are added in a given amount with respect to the mass of the bulk material. Further, the powder property-modifying method of this embodiment is to retain the water inside the bulk material in a bridge structure formed between the chemical agent and a powder composing the bulk material, or control the form or movement of the water inside the bulk material. Following is considered as a mechanism used to solve various problems that are caused by water-derived properties such as adherability and fluidity when handling a water-containing powder. For example, since water is retained in the gaps of the bulk material by the chemical agent, the water is unable to flow freely, the layers in the bulk material will be polarized into parts filled with water and voids, and there will occur voids that are not filled with water as the powder is turned into secondary particles (agglomerated) by water and the chemical agent.

Further, other than retaining water inside the bulk material in the bridge structure, the free flow of water and the fluidity of the powder may also be controlled when, for example, there is a rise in viscosity as water turns into a compound(s), water is retained in the polymer absorption material, and the particles agglomerate as electric charges are imparted by the inorganic flocculant. **In** addition, when there occur voids as the powder is turned into secondary particles (agglomerated) by water and the chemical agent, a so-called "well-drained" state will be achieved whereby part of water will travel down inside the layers of the bulk material, which may make it possible to alleviate various problems that occur due to properties such as adherability and fluidity that are attributed to water.

The amount of the active component in the chemical agent that is added per the mass of the bulk material may be determined by the brand of the bulk material. More preferably, by measuring the moisture content in the bulk material and then determining such additive amount based on the measured moisture content in the bulk material, the effects of the chemical agent can be enjoyed while reducing the used amount thereof. This is particularly effective when the moisture content in the bulk material varies.

As a method for measuring the mass of the bulk material, there may be used, for example, the following methods. First of all, there may be used line metrics, i.e., a method for measuring the passing mass of a transport object based on the speed of a conveyor belt and the load. Further, there may be performed a calculation from a target object volume estimation that is obtained by a TOF (Time of Flight: non-contact distance meter) sensor, i.e., a method for calculating the passing mass by measuring the passing volume of the transport object from the speed of the conveyor belt and a piling height on the conveyor belt, and then multiplying such volume by the bulk density. This non-contact distance meter is capable of measuring the height of the transport object on the conveyor. Further, there may be employed the driving current value of the conveyor belt; and observation on shapes or the like via image analysis.

As a method for measuring the moisture content in the bulk material, there may be used, for example, a "neutron moisture meter," an "electric resistance moisture meter," a "continuous infrared moisture meter," and "observation on color or the like via image analysis."

As a method for adding only a given amount of the active component of the chemical agent with respect to the mass of the bulk material, there may be used any one or both of a method of adjusting the addition speed of the chemical agent in accordance with the passing speed of the bulk material; and a method of adjusting a ratio between the addition time and non-addition time of the chemical agent.

The active component of the chemical agent refers to a compound having any one or more of a powder bridging effect, a water absorption effect, and a particle agglomeration effect, other than a solvent and a dispersion medium. Such active component of the chemical agent is added in an amount of 0.001 to 0.07% by mass with respect to the mass of the bulk material. If added in an amount equal to or smaller than the lower limit, the amount of water retained by powder bridging may be insufficient. Excess water may cause problems such as equipment shutdown due to powder adhesion, blowout and reverse flow when transporting the powder, and collapsing of a storage pile. Meanwhile, even if added in an amount larger than the upper limit, not only the effect brought will reach saturation, but the chemical agent will be unable to be dispersed uniformly whereby the uniformity of the water-containing bulk material may deteriorate. The active component of the chemical agent is preferably added in an amount of not smaller than 0.004% by mass and not larger than 0.05% by mass with respect to the mass of the bulk material.

It is preferred that the bulk material be stirred and mixed when or after adding the chemical agent. Stirring and mixing can be performed using a dedicated stirrer or existing equipment including a crusher. For example, the chemical agent may be added onto a yard, followed by using a heavy machine to perform stirring and mixing. It may also be that the chemical agent is added onto the bulk material on the transportation conveyor belt, and then mixed therewith by utilizing a dropping impact occurring at a connecting chute of the conveyor belt. Further, stirring and mixing may also be performed using, for example, a stirrer, a kneader, and/or a screen. By performing these stirring and mixing operations, it is expected that the dispersibility of the chemical agent in the powder can be improved whereby the modification effect can thus be improved as well. Here, at that time, if performing stirring and mixing via connections of the transportation conveyor belt, the modification effect on the powder property improves as the number of times of connection increases within a range of at least one to about six times.

When adding the chemical agent, if the active component of the chemical agent is a solid (solid matter), it is preferred that there is prepared a dispersed solution or a solution by dispersing or dissolving the active component of the chemical agent in, for example, water or an organic liquid. Such liquid chemical agent may also be diluted before use. By adding a liquid to the bulk material, the handling property of the chemical agent and the addition efficiency thereof can be improved, and the dispersibility of the chemical agent in the powder composing the bulk material can be improved as well. When dispersed or dissolved in, for example, water or an organic liquid, the dispersibility of the chemical agent in the powder composing the bulk material will improve regardless of whether the chemical agent's active component as a solid matter still remains solid, or part or all of the active component is turned into a liquid and becomes a suspension (emulsion).

Even when the active component of the chemical agent is a liquid, by preparing a diluted solution, a dispersed solution or a solution as a result of diluting, dispersing or dissolving the active component of the chemical agent in, for example, water or an organic liquid, the chemical agent can be added as a solution with a viscosity lower than that of the active component of the chemical agent, and transpiration of the chemical agent's active component due to vaporization can be suppressed, thereby improving the addition efficiency and the dispersibility of the chemical agent in the powder composing the bulk material.

Even when the active component of the chemical agent is a gas, by preparing a dispersed solution or a solution as a result of dispersing or dissolving the active component of the chemical agent in, for example, water or an organic liquid, dissipation of the active component of the chemical agent can be suppressed, thereby improving the addition efficiency.

As for a concentration after diluting, dispersing or dissolving the active component of the chemical agent in, for example, water or an organic liquid, when expressed as a ratio of an active component mass to a sum of the active component mass and a liquid mass, it is preferred that this concentration be 5 to 60% by mass, more preferably 10 to 45% by mass. By employing an active component concentration in the chemical agent that is equal to or higher than the lower limit, there can be alleviated an impact where a harmful effect such as fluidization of the bulk material will be incurred by the liquid itself that is used to dilute, dissolve or disperse the chemical agent, thereby improving the effect of the chemical agent. By employing an active component concentration in the chemical agent that is equal to or lower than the upper limit, the viscosity of the diluted solution, dispersed solution or solution that is prepared by diluting, dispersing or dissolving the active component of the chemical agent in, for example, water or an organic liquid will become even lower. Due to this effect, the infiltration speed of the chemical agent in the layers of the bulk material can be more improved, whereby uneven distribution of the chemical agent can be more alleviated.

Further, in this embodiment, it is preferred that an aqueous or organic liquid other than the chemical agent be added when adding the chemical agent to the bulk material or when performing stirring. The dispersibility of the chemical agent's active component in the powder composing the bulk material can thus be improved.

By employing the powder property-modifying method of this embodiment, the following effects can be expected when handling a water-containing bulk material including a mineral ore, coal, and limestone. The handling property of the bulk material is improved since there can be suppressed, for example, powder adhesion to the equipment and devices, and blowout and reverse flow of the powder when transporting the same. The drying property of the bulk material is improved due to an effect where, for example, the specific surface area or gas permeability of the bulk material is increased as water is controlled by, for example, the bridge structure of the chemical agent and powder. Liquidization of the bulk material can be suppressed by immobilizing water. Further, collapsing of a storage pile stacked can be suppressed. The impact of flood brought about by rain water or the like can be suppressed. Freezing of a storage pile can be suppressed.

### Examples

### (Example 1)

The chemical agent of the above embodiment was added to Carajas powder ore, and changes in FMP (Flow Moisture Point) were observed. FMP is also called flow moisture point and is measured by a method established by the BC CODE (Code of Safe Practice for Solid Bulk Cargoes) of the International Maritime Organization (IMO; International Maritime Organization). FMP is indicated by a moisture content (percent by mass) at which fluidity starts to be exhibited. When loading a bulk material on a vessel, if the bulk material exhibits fluidity, there may occur a risk such as causing the vessel to capsize; thus, the bulk material is to be loaded on the vessel at a moisture content lower than FMP (normally not higher than 90% of FMP). The harmful effect incurred by a bulk material exhibiting fluidity may occur in any form such as flowage on, for example, a conveyor belt, a transporter vehicle, a loading heavy machine, and a delivering heavy machine, other than on a vessel; and flowout from a storage tank.

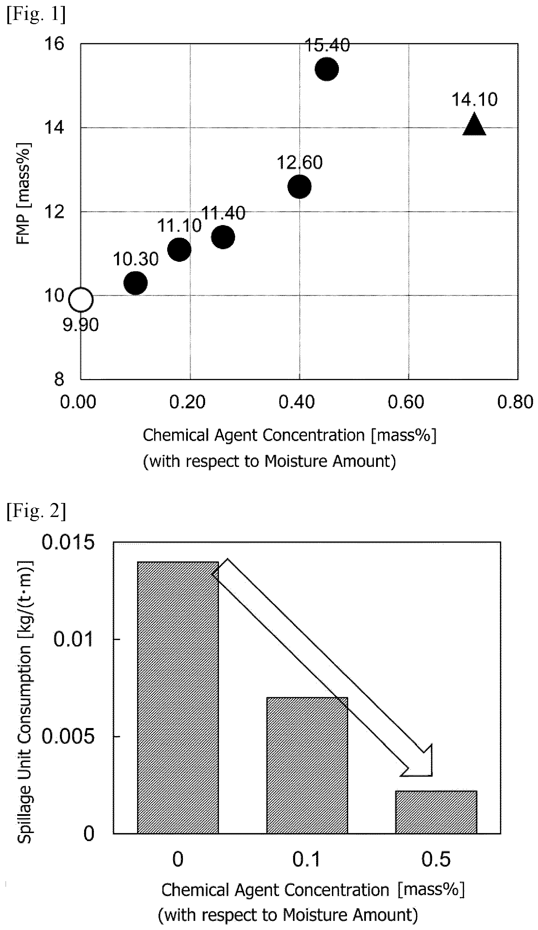

Fig.1 shows a correlation between FMP and the chemical agent concentration (percent by mass) with respect to a moisture amount in a bulk material. As is clear from this result, it can be seen that if the chemical agent is not added (∘ mark), fluidity is exhibited when the moisture content in the bulk material exceeds 9.90% by mass. Meanwhile, it can be seen that if the chemical agent concentration with respect to the moisture amount in the bulk material is in an appropriate range (• mark), FMP increases as the chemical agent concentration increases, which allows the fluidity of the bulk material to be controlled even when the moisture content in the bulk material increases as compared to before adding the chemical agent. On the other hand, when the chemical agent concentration with respect to the moisture amount in the bulk material is 0.72% by mass (▲ mark), it can be seen that the effect brought peaks. Therefore, the moisture content (FMP) at which the bulk material starts to exhibit fluidity can be efficiently raised by setting the chemical agent concentration with respect to the moisture amount in the bulk material to 0.01 to 0.45% by mass, i.e., the chemical agent concentration with respect to the mass of the water-containing bulk material to 0.001 to 0.07% by mass. Thus, there can be alleviated problems such as the capsizing of a vessel which is a typical example, and flowage on the conveyor belt or in the storage tank.

### (Example 2)

The chemical agent was added when transporting a bulk material on a conveyor belt, and there was studied an effect of reducing spillage and transportation troubles that are attributed to adhesion. Here, spillage mainly refers to falling at a position(s) beyond a turn-around position of the conveyor belt without falling at such turn-around position by adhering to the conveyor belt. The target bulk material counted was one having 8 to 8.5% by mass of water, in which a weight ratio of particles with particle sizes of not larger than 0.125 mm was 17 to 19% by mass.

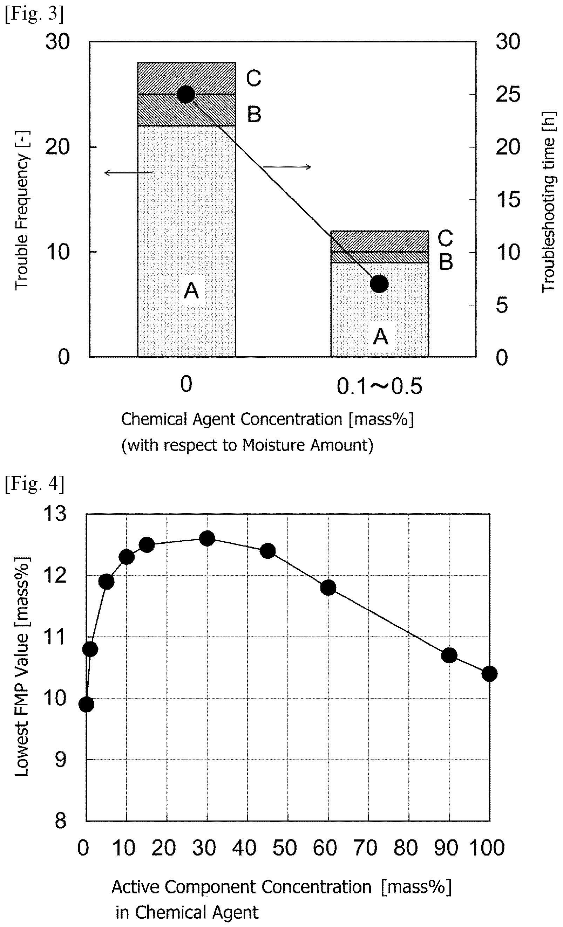

Fig.2 shows a correlation between the chemical agent concentration (percent by mass) with respect to the moisture amount in the bulk material and a spillage unit consumption (kg/(t·m)). Here, spillage unit consumption is expressed as a ratio of the mass (kg) of the bulk material that is lost during conveyor belt transportation to a transportation total mass (t) and a transportation distance (m). Fig.3 shows a correlation between the chemical agent concentration (percent by mass) with respect to the moisture amount in the bulk material; and the number of troubles and a troubleshooting time that are associated with conveyor belt transportation. Of the column charts indicated by trouble occurrence frequency of the left axis in Fig.3, A represents a frequency of conveyor belt deviation, B represents a frequency of unplanned cleaning due to adhered substances, and C represents a frequency associated with other causes. The plots in Fig.3 represent the troubleshooting time of the right axis. As is clear from the results shown in Fig.2, when the chemical agent concentration with respect to the moisture amount in the bulk material was 0.1% by mass, spillage decreased by 55%; and when the chemical agent concentration with respect to the moisture amount in the bulk material was 0.5% by mass, spillage decreased by 84%. Further, as is clear from the results shown in Fig.3, when the chemical agent concentration with respect to the moisture amount in the bulk material was 0.1 to 0.5% by mass, the trouble frequency associated with conveyor belt transportation substantially decreased by half, and the troubleshooting time decreased to 1/3 or less. The types of troubles that decreased most significantly were (A) conveyor belt deviation and (B) unplanned cleaning due to adhered substances. Further, when there was a rain of 40 mm or more while the bulk material was being stored outdoors in a stockpile yard or transported on the conveyor belt, blowout from a storage hopper due to fluidization therein often occurred if the chemical agent was not added (0% by mass). Meanwhile, when the chemical agent concentration with respect to the moisture amount in the bulk material was 0.1 to 0.5% by mass, blowout from the storage hopper did not occur even when there was a rain of 80 mm.

Further, when the chemical agent concentration with respect to the moisture amount in the bulk material was 0.1 to 0.5% by mass, a blended bulk material prepared by blending a bulk material with another bulk material exhibited an improved quality as the bulk materials themselves were uniformly dispersed without being unevenly distributed. For example, as a result of adding the chemical agent to a sintering raw material, the uniformity of a sintered ore improved, where an insufficient strength in an ununiform portion that had been previously observed was mitigated, thereby resulting in a lower degree of pulverization, which led to an improved yield. Further, when the chemical agent concentration with respect to the moisture amount in the bulk material was 0.1 to 0.5% by mass, there can also be brought about an effect of uniformly dispersing the bulk material without causing it to agglomerate. For example, efficiency improved in coal drying.

### (Example 3)

In Examples 1 and 2, chemical agent addition was performed on the conveyor belt transporting the bulk material. In contrast, when using a stirrer for the purpose of improving the mixing of the chemical agent into the bulk material, an equivalent level of effect was able to be achieved even when the amount of the chemical agent added was reduced to 9/10. As for bulk material brands that are difficult to be subjected to a stirrer, by adding the chemical agent at or immediately before the connecting part(s) of the transportation conveyor belt, an equivalent level of effect was able to be achieved even when the amount of the chemical agent added was reduced to 19/20.

### (Example 4)

Under the same conditions as Example 1, the chemical agent was added to Carajas powder ore. At that time, the chemical agent was used in the form of a solution prepared by dissolving solid active component(s) of the chemical agent in water, where changed was a ratio of the mass of the active component to a sum of the mass of the active component and the mass of water used for dissolution, i.e., the active component concentration in the chemical agent. The chemical agent was continuously added on the conveyor belt, and sampling was carried out at three locations which were the upper, middle, and lower portions of a pile of the Carajas powder ore that had dropped from the terminal end of the conveyor belt and to which the chemical agent had already been added. FMP of these samples was measured; of the abovementioned three locations, the lowest FMP value was regarded as the FMP lowest value. Fig.4 shows a correlation between the active component concentration in the chemical agent and the FMP lowest value. As is clear from Fig.4, when the active component concentration in the chemical agent was in a range of 5 to 60% by mass, the FMP lowest value was higher, which indicated that there could be suppressed a local deterioration in the FMP increasing effect, such local deterioration being caused by uneven distribution of the chemical agent. This tendency was even more noticeable when the active component concentration in the chemical agent was in a range of 10 to 45% by mass.

### (Example 5)

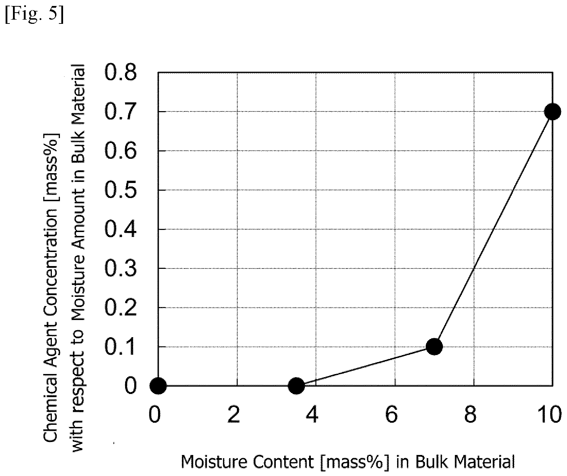

Due to the impact of weather or the like, the moisture content of a bulk material may deviate from the range of 8 to 8.5% by mass. The moisture content in the bulk material was measured, and the amount of the chemical agent added was adjusted, under the same conditions as Example 2 except for the moisture content in the bulk material. The moisture content in the bulk material was measured in advance by collecting the bulk material in the storage yard. When there were anticipated changes in a short period of time that were attributed to, for example, rain during conveyor belt transportation, measurement was continuously performed using an infrared moisture meter installed on the conveyor belt. When adjusting the additive amount of the chemical agent in accordance with the measured moisture content in the bulk material, the chemical agent concentration with respect to the moisture amount in the bulk material (mass of bulk material × moisture content in bulk material) was set in a manner shown in Fig.5, whereby the chemical agent addition speed was adjusted. At that time, when the bulk material moisture content was as low as, for example, 5% by mass, and the chemical agent addition speed was minimal, the chemical agent addition speed was able to be adjusted by adding the chemical agent in an intermittent manner, e.g., repeating a cycle in which the chemical agent is added for 2 sec, and then the addition is stopped for 1 sec. By more precisely identifying the moisture amount in the bulk material in such manner and adjusting the additive amount of the chemical agent in accordance with such moisture amount in the bulk material, an equivalent level of effect was achieved even when the chemical agent concentration with respect to the moisture amount in the bulk material was reduced to 9/10 of Example 2.

### (Example 6)

The invention was applied to a process used in ironworks where granulation is at first conducted by adding lime, a carbon material, and water to a powder ore stored in a raw material yard, followed by performing sintering in a sintering furnace to obtain a sintered ore, and then using such sintered ore as a blast furnace raw material. There, comparisons were made between a case where the chemical agent was added during the transportation of the bulk material and a case where the chemical agent was not added during the transportation of the bulk material. If adding the chemical agent, the chemical agent was added to the powder ore that had not yet been stored in the raw material yard, in an amount of 0.3% by mass with respect to the moisture amount contained in the powder ore.

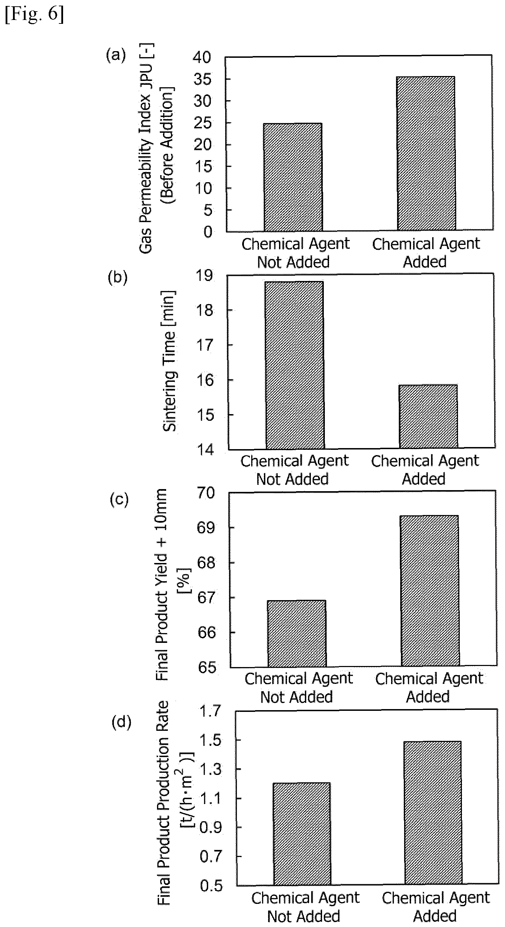

The performance of the sintering process is shown in Fig.6. Fig.6(c) shows a final product yield of the sintered ore. The final product yield is a plus sieve ratio obtained by crushing the sintered ore to a particle size of about 20 mm after performing sintering in the sintering furnace, and then sieving the crushed sintered ore with a sieve having an opening of 10 mm. Minus sieve that passes through the sieve with the opening of 10 mm is not up to standard and thus will not be a final product, because it hinders the gas permeability in the blast furnace when charged thereinto. From this result, it can be seen that the minus sieve passing through the sieve with the opening of 10 mm decreased as a result of adding the chemical agent. In this case, it is considered that the small-particle-size powder of the powder ore stored in the raw material yard was inhibited from being solidified (naturally granulated) due to the impact of water. That is, it is considered that there was a reduction in the generation of a coarse and low-strength granulated product mainly composed of the small-particle-size powder. Fig.6(a) shows a gas permeability after granulation; it can be seen that the gas permeability increased by adding the chemical agent. As such, it is considered that before performing sintering in the sintering furnace, deterioration in gas permeability that is caused by the destruction of the low-strength granulated product was mitigated. Since gas permeability affects the sintering time in the sintering furnace, the sintering time shrank by about 20 percent by adding the chemical agent, as shown in Fig.6(b). Fig.6(d) shows a final product production rate. The final product production rate increased by 20 percent or more due to a synergy effect achieved by improving the final product yield and shrinking the sintering time; these effects are brought about by adding the chemical agent.

### Industrial Applicability

According to the powder property-modifying method, water-containing bulk material production method, and water-containing bulk material of the present invention, the handling property at the time of transporting and storing a water-containing bulk material and the stability of a storage pile can be improved, whereby the bulk material can be efficiently utilized, and accidents can be prevented, which makes the present invention industrially useful. Further, according to the sintering raw material granulation method of the present invention, yield can be improved, sintering time can be shrunk, and productivity can be improved, which makes the present invention industrially useful.

## Claims

1. A powder property-modifying method used when handling a water-containing bulk material including a mineral ore, coal, and limestone, comprising:
adding an active component of a chemical agent whose main component is at least one selected from a polymer flocculant, an inorganic flocculant, and a polymer water absorption material, in an amount of 0.001 to 0.07% by mass with respect to the mass of the bulk material; and
optionally stirring and mixing the bulk material either when or after adding the chemical agent to the bulk material, whereby the chemical agent is dispersed in a powder composing the bulk material via stirring performed utilizing a dedicated stirrer or existing equipment including a crusher, stirring performed by a heavy machine, or stirring performed utilizing an impact incurred by a connecting drop of a transportation conveyor belt, wherein
water inside the bulk material is retained in a bridge structure formed between the chemical agent and the powder composing the bulk material.

2. A powder property-modifying method used when handling a water-containing bulk material including a mineral ore, coal, and limestone, comprising:
adding an active component of a chemical agent whose main component is at least one selected from a polymer flocculant, an inorganic flocculant, and a polymer water absorption material, in an amount of 0.001 to 0.07% by mass with respect to the mass of the bulk material; and
optionally stirring and mixing the bulk material either when or after adding the chemical agent to the bulk material, whereby the chemical agent is dispersed in a powder composing the bulk material via stirring performed utilizing a dedicated stirrer or existing equipment including a crusher, stirring performed by a heavy machine, or stirring performed utilizing an impact incurred by a connecting drop of a transportation conveyor belt, wherein
the form or movement of water inside the bulk material is controlled by a bridge structure formed between the chemical agent and the powder composing the bulk material.

3. The powder property-modifying method according to claim 1 or 2, wherein
the active component is previously diluted, dispersed, or dissolved in an aqueous or organic liquid to be turned into a chemical agent, followed by adding this chemical agent to a bulk material as a target, in which an aqueous or organic liquid other than the chemical agent is optionally added when adding the chemical agent to the bulk material or when performing the stirring.

4. The powder property-modifying method according to claim 3, wherein
a required additive amount of the active component is determined from the mass of the bulk material and a moisture content in the bulk material, and the additive amount of the chemical agent is adjusted so as to satisfy the required additive amount.

5. The powder property-modifying method according to claim 3, wherein
the chemical agent is such that a ratio of the active component to a sum of the active component and the liquid is 5 to 60% by mass.

6. The powder property-modifying method according to claim 3, wherein
the chemical agent is such that a ratio of the active component to a sum of the active component and the liquid is 10 to 45% by mass.

7. A production method for a water-containing bulk material that is transported via at least one selected from a vessel, a transporter vehicle, a loading heavy machine, a delivering heavy machine, a conveyor belt, and a storage tank, comprising:
modifying the water-containing bulk material with the modifying method according to any one of claims 1 to 6.

8. A water-containing bulk material that is transported via at least one selected from a vessel, a transporter vehicle, a loading heavy machine, a delivering heavy machine, a conveyor belt, and a storage tank, wherein
the water-containing bulk material has been modified by the modifying method according to any one of claims 1 to 6.

9. A granulation method for a raw material for sintering, comprising:
performing granulation using the water-containing bulk material according to claim 8 as part or all of the raw material.
